# EUROPÄISCHE PATENTSCHRIFT

(11) **EP 3 013 715 B1**
(45) Veröffentlichungstag und Bekanntmachung des Hinweises auf die Patenterteilung: **27.09.2017**
(21) Anmeldenummer: 14736667.8
(22) Anmeldetag: 20.06.2014
(51) Int. Cl.: B65G 15/58, B65G 59/12

(54) **VORRICHTUNG UND VERFAHREN ZUM ENTSCHICHTEN UND FÖRDERN VON IN STAPELN ANGEORDNETEN GEGENSTÄNDEN**
SYSTEM AND METHOD FOR DESTACKING AND CONVEYING ARTICLES ARRANGED IN STACKS
DISPOSITIF ET PROCÉDÉ DE DÉPILAGE ET DE TRANSPORT D'OBJETS EMPILÉS

(30) Priorität: 27.06.2013 DE 102013212423
(43) Veröffentlichungstag der Anmeldung: 04.05.2016
(73) Patentinhaber: Siemens Aktiengesellschaft, 80333 München (DE)
(72) Erfinder: TANZ, Torsten, 78247 Hilzingen (DE)
(74) Vertreter: Maier, Daniel Oliver
(86) Internationale Anmeldenummer: PCT/EP2014/063007
(87) Internationale Veröffentlichungsnummer: WO 2014/206874

(56) Entgegenhaltungen:
- DE-A1-102010 042 753
- DE-A1-102012 104 562
- JP-A- 2005 225 617

## Beschreibung

Die Erfindung betrifft eine Vorrichtung zum Entschichten und Fördern von in Stapeln angeordneten Gegenständen, mit einem Fördermittel, das zum Transportieren der Gegenstände in einer Förderrichtung ausgebildet ist, das zu einer Horizontalen um einen Neigungswinkel geneigt verläuft und dass ein Antriebsmittel und Adhäsionselemente aufweist, wobei die Adhäsionselemente eine Adhäsionskraft auf in Kontakt stehende Gegenstände ausüben, und mit einer Steuerung, die mit dem Antriebsmittel des Fördermittels verbunden ist.
Weiterhin betrifft die Erfindung ein Verfahren zum Entschichten und Fördern von in Stapeln angeordneten Gegenständen, bei dem die Gegenstände zunächst auf ein in einer Förderrichtung verlaufendem Fördermittel angeordnet werden, die Gegenstände von dem Fördermittel in der Förderrichtung mit einem Neigungswinkel zur Horizontalen gefördert werden, während des Förderns die mit Adhäsionselementen an den Fördermitteln in Kontakt befindlichen Gegenstände zumindest zeitweise gehalten werden und von den übrigen Gegenständen vereinzelt werden.
Zur Erhöhung des Durchsatzes und der Vereinfachung der Fördertechnik wird in zunehmendem Maße von der Methode des Einzelstückhandlings auf die Methode des Bulkhandlings von Gegenständen, insbesondere Stückgütern, übergegangen. Bulkhandling heißt hierbei, dass die Gegenstände quasi als Schüttgut behandelt werden, in einem sogenannten dreidimensionalen Fluss. Bei Stückgütern der Kurier-, Express- und Paketindustrie sind die Abmessungen, Gewichte, Formen und Oberflächen äußerst inhomogen. Trotzdem müssen diese Gegenstände aus dem dreidimensionalen Fluss in einen Fluss vereinzelter Stückgüter umgewandelt werden, um die Gegenstände effektiv sortieren zu können. Dazu wird zuerst aus dem dreidimensionalen Strom, dem Volumen- oder Bulkstrom, ein zweidimensionaler Strom, der sogenannte Flächenstrom, erzeugt, so dass möglichst keine Gegenstände mehr übereinander liegen. Dieser Vorgang wird als vertikale Vereinzelung oder Entschichtung bezeichnet. Die entschichteten Gegenstände dürfen nicht mehr, auch nur teilweise, bezogen auf die Grundfläche, übereinanderliegen. Nach der Entschichtung folgt eine horizontale Vereinzelung, d. h., die Erzeugung eines eindimensionalen Stromes aus dem zweidimensionalen Strom. Aus dem Stand der Technik sind eingangs beschriebene Vorrichtungen bzw. Verfahren bekannt. Die Entschichtung wird bei den bekannten Vorrichtungen insbesondere durch eine kaskadierte Anordnung von mehreren steigenden oder fallenden Stetigförderern durchgeführt. Vorrichtungen und Verfahren aus dem Stand der Technik sind beispielsweise in der US 6,491,154 oder der US 5,641,052 beschrieben. JP2005225617 beschreibt eine gattungsgemäße Vorrichtung mit Adhäsionselemente. Der Erfindung liegt die Aufgabe zugrunde, eine gegenüber dem Stand der Technik verbesserte Vorrichtung und ein verbessertes Verfahren bereitzustellen, mit denen eine Entschichtung von Gegenständen effektiver durchgeführt werden kann.

Die eingangs genannte Vorrichtung löst die Aufgabe durch die Merkmale nach Anspruch 1, wobei die Adhäsionselemente mit der Steuereinrichtung verbunden und von der Steuereinrichtung aktivierbar ausgebildet sind.

Das eingangs genannte Verfahren löst die Aufgabe durch die Merkmale nach Anspruch 8, wobei die Adhäsionselemente von einer Steuerung aktiviert und deaktiviert werden.
Die erfindungsgemäße Lösung hat den Vorteil, dass das gezielte Aktivieren der Adhäsionselemente eine zusätzliche Normalkraft auf die direkt auf dem Fördermittel liegenden Gegenstände ausgeübt. Durch ein intermittierendes Zu- und Abschalten der Adhäsionselemente kann ein Rucken der zuunterst liegenden Gegenstände erzielt werden, was zu einer positiven Bewegung der darauf liegenden Gegenstände und weiteren positiven Vereinzelungseffekten führt. Durch die erfindungsgemäße effektivere Entschichtung kann die Vorrichtung bzw. die gesamte Sortieranlage platzsparender ausgebildet werden und die erfindungsgemäß bedingten Vereinzelungseffekte können steuerbar eingesetzt werden.

Die erfindungsgemäße Lösung kann durch vorteilhafte Ausführungsformen weiterentwickelt werden, die unabhängig voneinander kombinierbar sind.

So können die Adhäsionselemente elektrisch aktivierbar ausgebildet sein. Dies hat den Vorteil, dass die Aktivierung durch die Steuerung besonders einfach möglich ist und die Adhäsionselemente leicht in bekannte Fördermittel, wie beispielsweise Gurtbandförderer, Gliederkettenförderer oder Rollenförderer integrierbar sind. Dabei sind die Adhäsionselemente insbesondere als elektrostatische Adhäsionselemente ausgebildet, die eine ausreichende Adhäsionskraft erzeugen und technisch leicht einsetzbar sind.

Damit die zu oberst liegenden Gegenstände leichter von den zu unterst liegenden Gegenständen herabgleiten, kann der Neigungswinkel größer als 18° sein. Damit kann der Neigungswinkel größer als bei Entschichtungsvorrichtungen aus dem Stand der Technik ausgebildet sein.

In einer vorteilhaften Ausgestaltung können die Adhäsionselemente Adhäsionsabschnitte ausbilden, wobei die Adhäsionsabschnitte unabhängig voneinander ansteuerbar sind. Dies hat den Vorteil, dass die Adhäsionsabschnitte, die in Förderrichtung hintereinander oder quer zur Förderrichtung nebeneinander angeordnet sein können, je nach Belegung des Fördermittels mit Gegenständen aktiviert oder deaktiviert werden können.

In einer Weiterbildung der Erfindung kann die Einrichtung mehrere hintereinander und/oder nebeneinander angeordnete Fördermittel aufweisen, die jeweils Adhäsionselemente aufweisen, wobei die Adhäsionselemente unterschiedlicher Fördermittel von der Steuerung unabhängig voneinander steuerbar sind. Dies hat den Vorteil, dass die Adhäsionselemente an unterschiedlichen Fördermitteln unterschiedlich gesteuert werden können, wodurch die Entschichtung noch effizienter gestaltet werden kann.

Um zusätzliche Vereinzelungseffekte zu erzielen, können die Antriebsmittel die Fördermittel mit unterschiedlichen Fördergeschwindigkeiten antreiben.

Ferner kann die Vorrichtung eine Sensoreinheit zum Ermitteln einer Gegenstandsverteilung aufweisen, wobei die Steuereinrichtung die Adhäsionselemente in Abhängigkeit von der ermittelten Gegenstandsverteilung steuert. So kann beispielsweise in Abhängigkeit von der Belegung des Bandes die Entschichtung mittels der Adhäsionselemente geregelt werden.

In einer vorteilhaften Ausgestaltung des erfindungsgemäßen Verfahrens können die Adhäsionselemente von der Steuerung elektrisch aktiviert und deaktiviert werden. So ist das erfindungsgemäße Verfahren technisch einfach umsetzbar. Zum Entschichten werden die Adhäsionselemente für Sekundenbruchteile, also für eine Zeit kleiner als eine Sekunde, deaktiviert.

Ferner kann eine Gegenstandsverteilung auf dem Fördermittel ermittelt werden und die Adhäsionselemente in Abhängigkeit von der Gegenstandsverteilung angesteuert werden, um die Entschichtungsmaßnahmen in Abhängigkeit von der Belegung des Fördermittels zu steuern.

Im Folgenden wird die Erfindung mit Bezug auf die beispielhafte Ausführungsform in den beigefügten Zeichnungen erläutert.

Es zeigen:
- Figur 1: eine schematische Darstellung einer beispielhaften Ausführungsform der erfindungsgemäßen Vorrichtung in einer Seitenansicht;
- Figur 2: eine schematische Darstellung der Ausführungsform in Figur 1 in einer Draufsicht;
- Figur 3: eine schematische Darstellung einer weiteren beispielhaften Ausführungsform der erfindungsgemäßen Vorrichtung in einer Draufsicht.

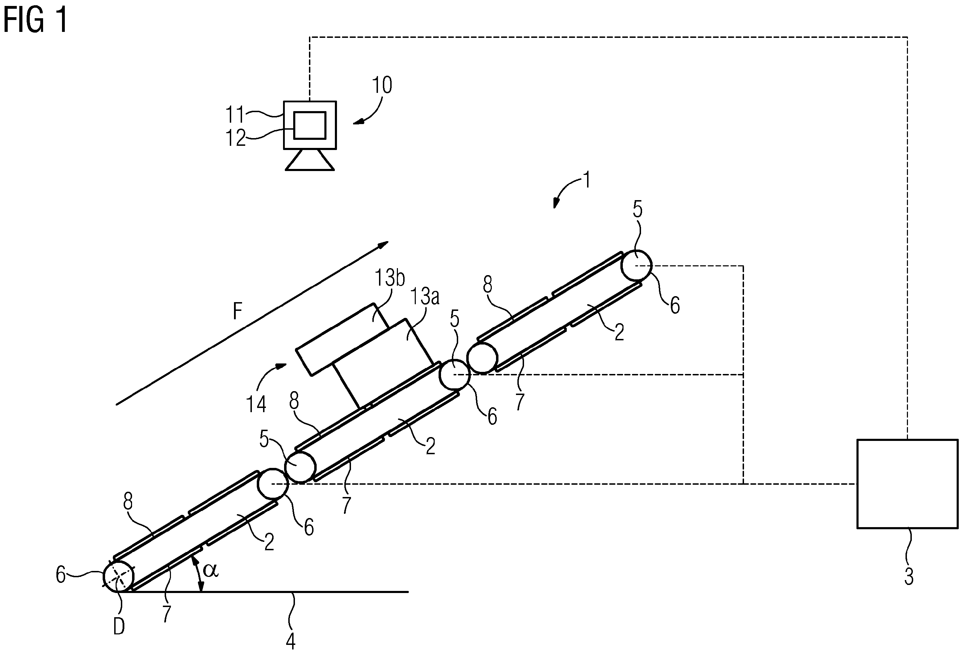

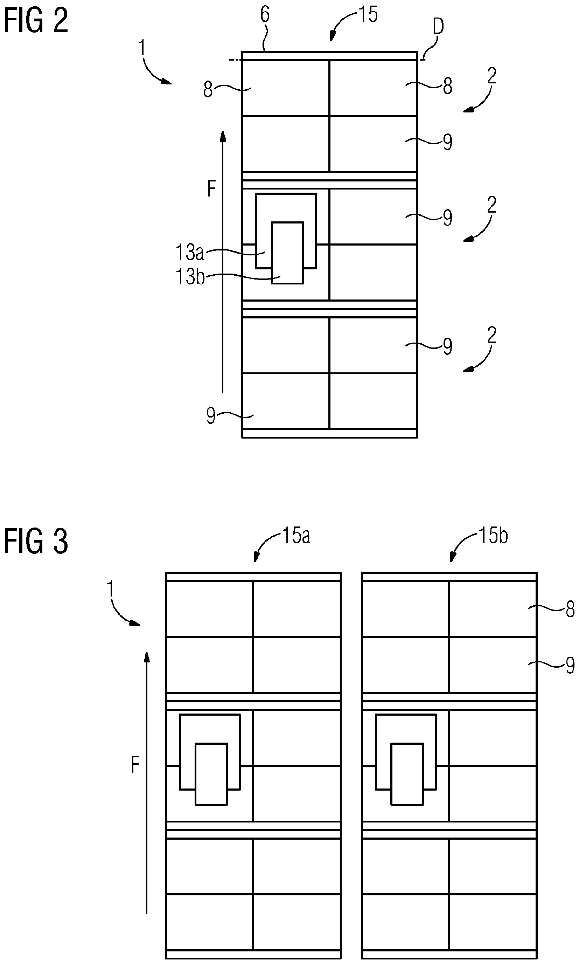

Zunächst wird die Erfindung anhand der beispielhaften Ausführungsform in den Figuren 1 und 2 erläutert.

Die Vorrichtung 1 umfasst als Fördermittel drei Förderbänder 2 und eine Steuerung 3, die jeweils mit den Förderbändern steuerungstechnisch verbunden ist.

Die Förderbänder 2 sind in einer Förderrichtung F hintereinander kaskadierend angeordnet und verlaufen jeweils in einem Neigungswinkel α zur Horizontalen 4. Der Neigungswinkel α beträgt bei der Ausführungsform in Figur 1 18°. Die Förderbänder 2 sind bei der beispielhaften Ausführungsform im Wesentlichen fluchtend zueinander angeordnet, wobei sie alternativ auch mit einem Versatz angeordnet sein können, wie es aus dem Stand der Technik bekannt ist. Ebenfalls alternativ könnten die Neigungswinkel der Förderbänder 2 auch zueinander unterschiedlich sein.

Die Förderbänder 2 sind im Wesentlichen gleich ausgebildet und umfassen jeweils ein Antriebsmittel 5, Umlenkrollen 6, ein Gurtband 7 und Adhäsionselemente 8.

Die Umlenkrollen 6 sind mit einer Drehachse D quer zur Förderrichtung F und parallel zueinander angeordnet. Das Gurtband 7 verläuft endlos um die beiden Umlenkrollen 6 herum. Zwischen den Umlenkrollen 6 verläuft das Gurtband 7 mit dem Neigungswinkel α zur Horizontalen 4. Das Antriebsmittel 5 ist mit einer der Umlenkrollen 6 verbunden, um die Umlenkrolle 6 anzutreiben. Das Antriebsmittel 5 ist beispielsweise ein Elektromotor, der auch in der Umlenkrolle 6 integriert sein kann. Der Elektromotor ist über ein geeignetes Getriebe mit der Umlenkrolle verbunden. Das Antriebsmittel 5 ist signaltechnisch mit der Steuerung 3 verbunden und wird von der Steuerung gesteuert.

Die Adhäsionselemente 8 sind bei der beispielhaften Ausführungsform in Figur 1 in den Gurtbändern 7 integriert. Die Adhäsionselemente 8 bilden dabei Adhäsionsabschnitte 9 aus. Die Adhäsionselemente 8 sind jeweils mit der Steuerung verbunden und von der Steuerung aktivierbar bzw. deaktivierbar. Die Adhäsionselemente 8 eines Adhäsionsabschnitts 9 können von der Steuerung 3 gleichzeitig aktiviert und unabhängig von Adhäsionselementen 8 in einem anderen Adhäsionsabschnitt 9 aktiviert werden. Die Adhäsionsabschnitte 9 in der Ausführungsform in Fig. 1 und 2 sind im Wesentlichen rechteckig ausgebildet und grenzen aneinander. So ist jedes Gurtband 7 flächendeckend mit Adhäsionselementen 8 ausgebildet, so dass Gegenstände 13 überall gehalten werden können.

Die Adhäsionselemente 8 sind bei der Ausführungsform der Figuren 1 und 2 in den Gurtbändern 7 integriert. Die Adhäsionselemente 8 sind als elektrostatische Adhäsionselemente 8 ausgebildet, die Elektroden (nicht dargestellt) aufweisen, die in den Gurtbändern angeordnet sind und von der Steuerung 3 aktiviert und gesteuert werden. Dabei sind die Elektroden der Adhäsionselemente 8 durch Kabel (nicht dargestellt) mit der Steuerung 3 verbunden. Um die Verkabelung von der fest angeordneten Steuerung 3 zu den beweglichen Gurtbändern 7 zu führen, sind beispielsweise Schleifkontakte oder ähnliche technische Lösungen eingesetzt.

Die Vorrichtung 1 umfasst weiterhin eine über den Förderbändern 2 angeordnete Sensoreinheit 10. Die Sensoreinheit 10 ist signaltechnisch mit der Steuerung 3 verbunden und weist ein Bildaufnahmegerät 11 und eine Auswerteeinheit 12 auf. Das Bildaufnahmegerät 11, beispielsweise eine Kamera oder ein 3D Laserscanner, ist so über den Förderbändern 2 angeordnet, dass sie alle Gegenstände 13, die sich auf den Förderbändern 2 befinden, erkennen kann.

Aus Darstellungsgründen sind die Sensoreinheit 10 und die Steuerung 3 nur in der Seitenansicht in Figur 1 dargestellt.

Im Folgenden wird die Funktion der erfindungsgemäßen Vorrichtung 1 in der Ausführungsform der Figuren 1 und 2 beschrieben.

Zunächst wird ein Bulk 14 von Gegenständen 13 auf einem der Förderbänder 2 positioniert. Bei der schematischen Darstellung in Figur 1 besteht der Bulk 14 lediglich aus zwei Gegenständen 13, die beispielsweise Pakete sind. In der Praxis werden selbstverständlich üblicherweise größere Mengen an Gegenständen auf die Vorrichtung 1 geschüttet.

Anschließend werden die zuunterst liegenden Gegenstände 13a, die mit den Gurtbändern 7 direkt in Kontakt stehen, durch die Förderbänder 2 in die Förderrichtung F gefördert. Die Förderbänder 2 sind permanent angetrieben, solange kein Stau an Gegenständen 13 im Folgeprozess auftritt. Damit die zuunterst liegenden Gegenstände 13a nicht entgegen der Förderrichtung F von dem geneigten Förderband 2 rutschen, werden die Adhäsionselemente 8 von der Steuerung 3 aktiviert. Die Adhäsionselemente 8, die in Kontakt mit den Gegenständen 13 a sind, üben eine zusätzliche Normalkraft auf die Gegenstände 13a aus. Dadurch werden die Gegenstände 13a auf dem relativ steilen Förderband 2 gehalten und von den Gurtbändern 7 in Förderrichtung F gefördert. Durch die Adhäsionselemente 8 werden die Gegenstände 13a so gut an den Gurtbändern 7 gehalten, dass ein erheblich steilerer Neigungswinkel α als bei Vorrichtungen ohne Adhäsionselemente eingestellt werden kann. So wird eine Entschichtung erreicht, weil durch den steileren Neigungswinkel α viele obenliegende Gegenstände 13b allein durch die Schwerkraft von den zuunterst liegenden Gegenständen 13a fallen. Trotzdem kann es vorkommen, dass Gegenstände 13b, beispielsweise durch Verhaken, auf den zuunterst liegenden Gegenständen 13a verbleiben und nicht entschichten. Die übereinandergeschichteten Gegenstände 13a, 13b werden von der Sensoreinheit 10 erfasst.

Dabei erstellt die Bildaufnahmeeinheit 11 Bilder von der Belegung der Förderbänder 2 durch die Gegenstände 13. Die Bilder werden von der Auswerteeinheit 12 so ausgewertet, dass ein für die Gegenstandsverteilung charakteristischer Parameter ermittelt wird und an die Steuerung 3 übertragen wird. Weiterhin wird ein separater Parameter für jeden Adhäsionsabschnitt 9 ermittelt und übertragen. Somit bekommt die Steuerung 3 von der Sensoreinheit 10 Informationen über die Gegenstandsverteilung auf den Förderbändern 2 für jeden Adhäsionsabschnitt 9. Anhand der Gegenstandsverteilung weiß die Steuerung 3, ob sich aufgeschichtete Gegenstände 13b auf den Förderbändern 2 befinden.

Wenn dies der Fall ist, wie in Figur 1 dargestellt, deaktiviert die Steuerung 3 die Adhäsionselemente 8 des Adhäsionsabschnitts 9, in dem sich der Gegenstand 13a befindet, kurzzeitig. Dadurch fehlt die Haltekraft der Adhäsionselemente 8 auf den Gegenstand 13a, so dass dieser während der Deaktivierung entgegen der Förderrichtung F auf dem Förderband 2 hinunter rutscht. Das Rutschen ist allerdings nur kurzzeitig, weil die Steuerung nach Sekundenbruchteilen die Adhäsionselemente 8 wieder aktiviert und so den Gegenstand 13a wieder zum Gurtband 7 fixiert. Durch das kurzzeitige Deaktivieren der Adhäsionselemente 8 und das Rutschen des zuunterst liegenden Gegenstandes 13a wird ein Ruck auf den obenliegenden Gegenstand 13b ausgeübt. Dadurch gerät der Gegenstand 13b relativ zum unteren Gegenstand 13a in Bewegung, rutscht weiter und wird dadurch entschichtet.

Die entschichteten Gegenstände 13, die nun einen zweidimensionalen Strom bilden, werden bei permanent aktivierten Adhäsionselementen bis ans Ende der Vorrichtung 1 gefördert und dort zur weiteren Verarbeitung an den nachfolgenden Sortierprozess übergeben.

Im Folgenden wird die weitere Ausführungsform in Figur 3 beschrieben. Der Einfachheit halber wird lediglich auf Unterschiede zu der Ausführungsform der Figuren 1 und 2 eingegangen.

Die Vorrichtung 1 in Figur 3 umfasst zwei nebeneinanderliegende Förderabschnitte 15a, 15b, die jeweils der aus nur einem Förderabschnitt 14 bestehenden Ausführungsform in Figur 2 entsprechen.

Die beiden Förderabschnitte 15a, 15b sind von der Steuerung 3 (nicht dargestellt) separat steuerbar. Dadurch kann bei Bedarf ein Förderabschnitt 15a, 15b abgeschaltet werden oder durch unterschiedliche Geschwindigkeiten bestimmte Sortiereffekte, wie beispielsweise Drehen der Gegenstände 13 oder ähnliches, erzielt werden.

## Patentansprüche

1. Vorrichtung (1) zum Entschichten und Fördern von in Stapeln angeordneten Gegenständen (13),
mit einem Fördermittel (2), das zum Transportieren der Gegenstände (13) in einer Förderrichtung (F) ausgebildet ist, das zu einer Horizontalen (4) um einen Neigungswinkel (α) geneigt verläuft und das ein Antriebsmittel (5) und Adhäsionselemente (8) aufweist, wobei die Adhäsionselemente (8) eine Adhäsionskraft auf in Kontakt stehende Gegenstände (13b) ausüben, und mit einer Steuerung (3), die mit dem Antriebsmittel (5) des Fördermittels (2) verbunden ist, wobei die Adhäsionselemente (8) mit der Steuerung (3) verbunden und von der Steuerung (3) aktivierbar ausgebildet sind, **dadurch gekennzeichnet, dass** die Adhäsionselemente (8) von der Steuerung aktiviert und deaktiviert werden, damit während des Förderns die mit Adhäsionselementen (8) an den Fördermitteln (2) in Kontakt befindlichen Gegenstände (13a) zumindest zeitweise durch Adhäsionselemente (8) gehalten werden und von den übrigen Gegenständen (13) entschichtet werden.

2. Vorrichtung (1) nach Anspruch 1,
**dadurch gekennzeichnet, dass** die Adhäsionselemente (8) elektrisch aktivierbar ausgebildet sind.

3. Vorrichtung (1) nach Anspruch 1 oder 2,
**dadurch gekennzeichnet, dass** der Neigungswinkel (α) größer als 18° ist.

4. Vorrichtung (1) nach einem der oben genannten Ansprüche,
**dadurch gekennzeichnet, dass** Adhäsionselemente (8) Adhäsionsabschnitte (9) ausbilden, wobei die Adhäsionsabschnitte (9) unabhängig voneinander ansteuerbar sind.

5. Vorrichtung (1) nach einem der oben genannten Ansprüche,
**dadurch gekennzeichnet, dass** die Vorrichtung (1) mehrere hintereinander und/oder nebeneinander angeordnete Fördermittel (2) aufweist, die jeweils Adhäsionselemente (8) umfassen, wobei die Adhäsionselemente (8) unterschiedlicher Fördermittel (2) von der Steuerung (3) unabhängig voneinander steuerbar sind.

6. Vorrichtung (1) nach einem der oben genannten Ansprüche,
**dadurch gekennzeichnet, dass** die Antriebsmittel (5) die Fördermittel (2) mit unterschiedlichen Fördergeschwindigkeiten antreiben.

7. Vorrichtung (1) nach einem der oben genannten Ansprüche, **gekennzeichnet durch**,
eine Sensoreinheit (10) zum Ermitteln einer Gegenstandsverteilung, wobei die Steuereinrichtung (3) die Adhäsionselemente (8) in Abhängigkeit von der ermittelten Gegenstandsverteilung ansteuert.

8. Verfahren zum Entschichten und Fördern von in Stapeln (14) angeordneten Gegenständen (13), bei dem
die Gegenstände (13) zunächst auf einem in einer Förderrichtung (F) verlaufenden Fördermittel (2) angeordnet werden,
die Gegenstände (13) von dem Fördermittel (2) in der Förderrichtung (F) mit einem Neigungswinkel (α) zur Horizontalen (x)gefördert werden,
während des Förderns die mit Adhäsionselementen (8) an den Fördermitteln (2) in Kontakt befindlichen Gegenstände (13a) zumindest zeitweise durch Adhäsionselemente (8)gehalten werden und von den übrigen Gegenständen (13) entschichtet werden,
**dadurch gekennzeichnet, dass** die Adhäsionselemente (8) von einer Steuerung (3) aktiviert und deaktiviert werden.

9. Verfahren nach Anspruch 8,
**dadurch gekennzeichnet, dass** die Adhäsionselemente (8) von der Steuerung (3) elektrisch aktiviert und deaktiviert werden.

10. Verfahren nach Anspruch 9,
**dadurch gekennzeichnet, dass** die Adhäsionselemente (8) von der Steuerung (3) zum Entschichten der Gegenstände (13) für einen Zeitraum kleiner als eine Sekunde deaktiviert werden.

11. Verfahren nach Anspruch 9 oder 10,
**dadurch gekennzeichnet, dass** eine Gegenstandsverteilung auf dem Fördermittel (2) ermittelt wird und die Adhäsionselemente (8) in Abhängigkeit von der Gegenstandsverteilung angesteuert werden.

## Claims

1. System (1) for destacking and conveying articles (13) arranged in stacks,
with a conveying means (2) which is designed for transporting the articles (13) in a conveying direction (F), which is inclined relative to a horizontal (4) at an angle of inclination (α) and has a drive means (5) and adhesion elements (8), wherein the adhesion elements (8) exert an adhesion force on articles (13b) which are in contact, and with a controller (3) which is connected to the drive means (5) of the conveying means (2),
wherein the adhesion elements (8) are connected to the controller (3) and are embodied so as to be able to be activated by the controller (3), **characterised in that** the adhesion elements (8) are activated and deactivated by the controller, so that during the conveying the articles (13a) in contact with adhesion elements (8) on the conveying means (2) are held by adhesion elements (8) at least for a time and are destacked from the other articles (13).

2. System (1) according to claim 1,
**characterised in that**
the adhesion elements (8) are embodied so as to be able to be activated electrically.

3. System (1) according to claim 1 or 2,
**characterised in that**
the angle of inclination is greater than 18°.

4. System (1) according to one of the preceding claims,
**characterised in that**
adhesion elements (8) form adhesion sections (9), wherein the adhesion sections (9) are able to be activated independently of one another.

5. System (1) according to one of the preceding claims,
**characterised in that**
the system (1) has a number of conveying means (2) arranged after one another and/or next to one another, which each comprise adhesion elements (8), wherein the adhesion elements (8) of different conveying means (2) are able to be controlled independently of one another by the controller (3).

6. System (1) according to one of the preceding claims,
**characterised in that**
the drive means (5) drive the conveying means (2) at different conveying speeds.

7. System (1) according to one of the preceding claims,
**characterised by**
a sensor unit (10) for determining a distribution of articles, wherein the controller (3) activates the adhesion elements (8) as a function of the article distribution determined.

8. Method for destacking and conveying articles (13) arranged in stacks (14), in which
the articles (13) are first arranged on a conveying means (2) running in a conveying direction (F),
the articles (13) are conveyed by the conveying means (2) in the conveying direction (F) at an angle of inclination (α) to the horizontal (x),
during the conveying, the articles (13a) in contact with adhesion elements (8) on the conveying means (2) are held at least for a time by the adhesion elements (8) and are destacked from the other articles (13),
**characterised in that**
the adhesion elements (8) are activated and deactivated by a controller (3).

9. Method according to claim 8,
**characterised in that**
the adhesion elements (8) are activated and deactivated electrically by the controller (3).

10. Method according to claim 9,
**characterised in that**
the adhesion elements (8) are deactivated by the controller for a period of less than one second (3) for destacking the articles (13).

11. Method according to claim 9 or 10,
**characterised in that**
a distribution of articles on the conveying means (2) is determined and the adhesion elements (8) are activated as a function of the article distribution.

## Revendications

1. Dispositif (1) de dépilage et de transport d'objets (13) disposés en piles,
comprenant un moyen de transport (2), qui est adapté pour transporter les objets (13) selon une direction de transport (F), qui est incliné d'un angle (α) par rapport à une horizontale (4) et qui comporte un moyen d'entraînement (5) et des éléments d'adhérence (8), lesdits éléments d'adhérence (8) exerçant une force d'adhérence sur des objets (13b) en contact, et
comprenant une commande (3), qui est reliée au moyen d'entraînement (5) du moyen de transport (2),
**caractérisé en ce que** les éléments d'adhérence (8) sont activés et désactivés par la commande (3) afin que, durant le transport, les objets (13a) en contact avec des éléments d'adhérence (8) appliqués sur les moyens de transport (2) soient maintenus au moins par moments par des éléments d'adhésion (8) et dépilés des autres objets (13).

2. Dispositif (1) selon la revendication 1,
**caractérisé en ce que**
les éléments d'adhérence (8) sont réalisés de manière à pouvoir être activés électriquement.

3. Dispositif (1) selon la revendication 1 ou 2,
**caractérisé en ce que**
l'angle d'inclinaison (α) est supérieur à 18°.

4. Dispositif (1) selon l'une des revendications ci-dessus,
**caractérisé en ce que**
des éléments d'adhérence (8) forment des portions d'adhérence (9), lesdites portions d'adhérence (9) pouvant être commandées indépendamment les unes des autres.

5. Dispositif (1) selon l'une des revendications ci-dessus,
**caractérisé en ce que**
le dispositif (1) comporte plusieurs moyens de transport (2) disposés les uns derrière les autres et/ou les uns à côté des autres et comprenant chacun des éléments d'adhérence (8), les éléments d'adhérence (8) de moyen de transports (2) différents pouvant être commandés indépendamment les uns des autres par la commande (3).

6. Dispositif (1) selon l'une des revendications ci-dessus,
**caractérisé en ce que**
les moyens d'entraînement (5) entraînent les moyens de transport (2) à des vitesses de transport différentes.

7. Dispositif (1) selon l'une des revendications ci-dessus,
**caractérisé par**
une unité de capteur (10) destinée à détecter une répartition d'objets, le dispositif de commande (3) commandant les éléments d'adhérence (8) en fonction de la répartition d'objets détectée.

8. Procédé de dépilage et de transport d'objets (13) disposés en piles (14), dans lequel
les objets (13) sont tout d'abord placés sur un moyen de transport (2) s'étendant dans une direction de transport (F), les objets (13) sont transportés par le moyen de transport (2) dans la direction de transport (F) selon un angle d'inclinaison (α) par rapport à l'horizontale (x),
durant le transport, les objets (13a) en contact avec des éléments d'adhérence (8) appliqués sur les moyens de transport (2) sont maintenus au moins par moments par des éléments d'adhésion (8) et dépilés des autres objets (13),
**caractérisé en ce que**
les éléments d'adhérence (8) sont activés et désactivés par une commande (3).

9. Procédé selon la revendication 8,
**caractérisé en ce que**
les éléments d'adhérence (8) sont activés et désactivés électriquement par la commande (3).

10. Procédé selon la revendication 9,
**caractérisé en ce que**
les éléments d'adhérence (8) sont désactivés par la commande (3) pour le dépilage des objets (13) pendant une durée inférieure à une seconde.

11. Procédé selon la revendication 9 ou 10,
**caractérisé en ce que**
une répartition d'objets est détectée sur le moyen de transport (2) et les éléments d'adhérence (8) sont commandés en fonction de ladite répartition d'objets.
